# EUROPÄISCHE PATENTANMELDUNG

(11) **EP 3 906 775 A1**
(43) Veröffentlichungstag der Anmeldung: **10.11.2021**
(21) Anmeldenummer: 21156491.9
(22) Anmeldetag: 11.02.2021
(51) Int. Cl.: A01F 12/46, A01D 41/12

(54) **DOPPELSCHNECKENQUERFÖRDERER**

(30) Priorität: 06.05.2020 DE 102020112226
(71) Anmelder: CLAAS Selbstfahrende Erntemaschinen GmbH, 33428 Harsewinkel (DE)
(72) Erfinder: Brand, Andreas, 33428 Marienfeld (DE); Brandmeier, Jonas, 33428 Harsewinkel (DE)
(74) Vertreter: CLAAS Gruppe

(57) **Zusammenfassung**

Die Erfindung betrifft einen Doppelschneckenquerförderer (19) einer selbstfahrenden Erntemaschine (1), welche zumindest eine Siebanordnung (13) zum Abscheiden von Erntegut, ein Reinigungsgebläse (14), eine Überkehrschnecke (24) und einen Elevator (30) umfasst, wobei der Doppelschneckenquerförderer (19) zwischen dem Reinigungsgebläse (14) und der Überkehrschnecke (24) angeordnet ist und zumindest zwei Förderschnecken (25, 26) aufweist, welche untenseitig dem Elevator (30) zugeordnet sind, wobei die erste Förderschnecke (25) aus einem Luftaustrittsbereich (40) des Reinigungsgebläses (14) Erntegut abfördert und die zweite Förderschnecke (26) aus einem der Überkehrschnecke (24) zugewandten Bereich Erntegut abfördert.

## Beschreibung

Die Erfindung betrifft einen Doppelschneckenquerförderer einer selbstfahrenden Erntemaschine gemäß dem Oberbegriff des Anspruchs 1.

Eine selbstfahrende Erntemaschine wie etwa ein sogenannter Mähdrescher ist zum Ernten landwirtschaftlicher Güter wie beispielsweise Getreide, Mais, Raps oder auch Reis bekannt. Das Erntegut wird mit einem Schneidwerk aufgenommen und mittels einer Mehrzahl von Abreitsorganen in unterschiedliche Gutströme aufgetrennt. Die Arbeitsorgane umfassen zumindest eine Siebanordnung mit in aller Regel zwei horizontal übereinanderliegenden Sieben zum Abscheiden von Körnern und Beimengungen wie Spelzen oder Ährenbestandteile. Durch die Siebe, welche eine oszillierende Bewegung vollziehen, fallen nur separierte Körner und kleinere Beimengungen. Ein Reinigungsgebläse erzeugt einen Luftstrom, welcher die Siebe durchströmt und größere sowie leichte Beimengungen aus dem Mähdrescher fördert. Eine nicht durch das untere Sieb gefallene Erntegutmenge, die sogenannte Überkehr, verlässt das Sieb aufgrund der Bewegungen an dessen hinteren Ende und fällt aufgrund der Schwerkraft in eine Überkehrschneckenmulde, in der eine quer zur Längserstreckung des Mähdreschers ausgerichtete Überkehrschnecke angeordnet ist. Diese Überkehrschnecke fördert die Überkehr zu einer Längsseite des Mähdreschers und übergibt diese dann an einen Überkehrelevator, in dem die Überkehr einem Dreschorgan erneut zugeführt wird.
Die durch das untere Sieb, welches auch als Untersieb bezeichnet wird, hindurchgetretenen Körner fallen auf Grund der Schwerkraft in eine weitere Schneckenmulde, in der eine weitere quer zur Längserstreckung des Mähdreschers ausgerichtete Förderschnecke angeordnet ist. Diese fördert das Erntegut zu einem weiteren längsseitig am Mähdrescher befindlichen Kornelevator. Der Kornelevator fördert das Korn mittels an einer umlaufenden Kette angeordneten Förderplatten zu einem Korntank.

Aus der DE10 2008 023 022 B4 ist eine derartige selbstfahrende Erntemaschine bekannt geworden. Zur Erhöhung der Förderleistung wird der Querschnitt im Übergabebereich zwischen der Kornschnecke und dem Kornelevator vergrößert, um hier ein Aufstauen des Korns zu vermeiden. Die DE10 2008 023 022 B4 vergrößert den Übergabebereich, indem zwei achsparallel ausgerichtete Förderschnecken dem Kornelevator das Erntegut zuführen. Die beiden achsparallelen Förderschnecken weisen zusammen einen größeren Querschnitt im Übergangsbereich auf, sodass eine bessere Beschickung der Förderplatten der Kette erreicht wird. Bei hohen Erntegutdurchsätzen bildet das sich oberhalb der Förderschnecken anhäufende Korn einen Schüttkegel. Eine ungünstige Anordnung der Förderschnecken führt dazu, dass der Schüttkegel in das Reinigungsgebläse oder in die Überkehrschnecke überläuft. Dies führt zu einer Einschränkung der Funktion des Gebläses. Ein Überlaufen des Korns in die Überkehr benötigt durch das erneute Zuführen des bereits gereinigten Ernteguts zu den Dreschorganen zusätzliche Antriebsleistung und verursacht zusätzliches Bruchkorn.

Es ist Aufgabe der Erfindung die beschriebenen Nachteile des Stands der Technik zu vermeiden und insbesondere einen Doppelschneckenquerförderer zu schaffen, bei welchem die Förderleistung und Anordnung zweier Förderschnecken ein Überlaufen von Erntegut in das Reinigungsgebläse oder hin zur Überkehrschnecke vermieden wird.

Diese Aufgabe wird erfindungsgemäß durch die kennzeichnenden Merkmale des Anspruchs 1 gelöst.

Gemäß dem Anspruch 1 wird ein Doppelschneckenquerförderer einer selbstfahrenden Erntemaschine vorgeschlagen, welche zumindest eine Siebanordnung zum Abscheiden von Erntegut, ein Reinigungsgebläse, eine Überkehrschnecke und einen Elevator umfasst, wobei der Doppelschneckenquerförderer zwischen dem Reinigungsgebläse und der Überkehrschnecke angeordnet ist und zumindest zwei Förderschnecken aufweist, welche untenseitig dem Elevator zugeordnet sind, wobei die erste Förderschnecke aus einem Luftaustrittsbereich des Reinigungsgebläses Erntegut abfördert und die zweite Förderschnecke aus einem der Überkehrschnecke zugewandten Bereich Erntegut abfördert. Das Erntegut wird ausgehend von der Siebanordnung im Wesentlichen der zweiten Förderschnecke zugeführt und durch diese abgefördert. Ein Anhäufen des Ernteguts im Bereich der zweiten Förderschnecke führt dazu, dass das Erntegut zu der ersten Förderschnecke überläuft und durch diese abgefördert wird. Die erste Förderschnecke ist unmittelbar einem Überlauf hin zu dem Luftaustrittsbereich vorgelagert. Mithin fördert diese in Richtung des Luftaustrittsbereichs überlaufendes Erntegut ab und verhindert ein Überlaufen in das Reinigungsgebläse. Dies stellt die Funktions- sowie Leistungsfähigkeit des Reinigungsgebläses sicher und erhöht die maximale Förderleistung. Das zusätzliche Abfördern des Ernteguts reduziert den Schüttkegel oberhalb der zweiten Förderschnecke und vermeidet somit ebenfalls ein Überlaufen des Ernteguts hin zu der Überkehr.

In einer vorteilhaften Ausgestaltung kann das Reinigungsgebläse einen auf die Siebanordnung gerichteten Kanalabschnitt aufweisen, wobei die erste Förderschnecke einer der Siebanordnung zugewandten Öffnung des Kanalabschnitts zugeordnet ist. Dies ist besonders vorteilhaft, da somit ein Überlaufen von Erntegut hin zu dem Reinigungsgebläse vermieden wird.

In einer vorteilhaften Weiterbildung kann der äußere Durchmesser der ersten Förderschnecke kleiner als der äußere Durchmesser der zweiten Förderschnecke sein. Die erste Förderschnecke dient im Wesentlichen der Unterstützung der zweiten Förderschnecke um den Füllstand des Ernteguts im Bereich der Förderschnecken zu reduzieren und somit ein Überlaufen in das Reinigungsgebläse zu verhindern. Mithin kann diese einen geringeren äußeren Durchmesser aufweisen, sodass weniger Antriebsleistung für eine Rotationsbewegung der ersten Förderschnecke erforderlich ist. Die erste Förderschnecke kann entsprechend auch als Hilfsförderschnecke und die zweite Förderschnecke als Hauptförderschnecke bezeichnet werden.

In einer bevorzugten Ausführungsform kann zwischen der ersten und zweiten Förderschnecke ein Trennelement angeordnet sein, welches für beide Förderschnecken zumindest anteilig jeweils eine separate Mulde bildet, um einen Freiraum zwischen den Förderschnecken zu verringern und die Förderung zu unterstützen.

Vorteilhaft ist es, wenn die erste und zweite Förderschnecke zumindest einen Teil des von der Siebanordnung abgeschiedenen Ernteguts zu einem unteren Annahmebereich des Elevators fördern, wobei der Elevator mittels an einer umlaufenden Kette angeordneten Förderplatten das Erntegut in einen oberen Abgabebereich fördert, wobei die erste Förderschnecke seitlich neben der Kette endet und zumindest zwei Gutumleitelemente zum Umlenken des Ernteguts in Richtung der Kette aufweist. Hierdurch lässt sich das von der ersten Förderschnecke geförderte Erntegut auf einfache Art und Weise in Richtung der Kette umlenken und von den Förderplatten hin zu dem oberen Abgabebereich fördern.

In einer vorteilhaften Weiterbildung ist vorgesehen, dass die Drehachse der zweiten Förderschnecke deckungsgleich mit einer unteren Umlenkachse für die umlaufende Kette ist. Hierdurch erfolgt unabhängig von den Ernteguteigenschaften stets eine störungsfreie Übergabe des Ernteguts an den Elevator. Weiterhin fördert die in ihren äußeren Durchmesser größere und der Überkehrschnecke zugewandte zweite Förderschnecke eine größere Menge des Ernteguts als die erste Schnecke, sodass eine deckungsgleiche Anordnung mit der zweiten Förderschnecke gegenüber einer deckungsgleichen Anordnung mit der ersten Förderschnecke zu einer besseren Abförderung des Ernteguts im unteren Annahmebereich des Elevators führt.

In einer vorteilhaften Ausgestaltung können die Gutumleitelemente in Rotationsrichtung der ersten Förderschnecke gerade oder rückwärtsgekrümmt sein. Eine Rückwärtskrümmung ist besonders vorteilhaft um das Erntegut ausgehend von der Rotationsachse der ersten Förderschnecke in einen äußeren Bereich der Gutumleitelemente zu befördern. Das in den äußeren Bereich der Gutumleitelemente geförderte Erntegut kann so untenseitig im Annahmebereich den Förderplatten zugeführt werden, um ein Gegeneinanderlaufen mit dem Erntegutstrom der zweiten Förderschnecke zu vermeiden bzw. zu reduzieren.

Um das Gegeneinanderlaufen der Erntegutströme im Annahmebereich weiter zu reduzieren sieht eine weitere vorteilhafte Ausgestaltung vor, dass untenseitig der beiden Förderschnecken der äußere Durchmesser der ersten Förderschnecke auf einer horizontalen Ebene mit dem äußeren Durchmesser der zweiten Förderschnecke oder tiefer liegt.

Weiterhin kann der untere Annahmebereich obenseitig ein Leitelement aufweisen, welches mit den Gutumleitelementen zusammenwirkt um eine verbesserte Zuführung des Ernteguts an die Förderplatten zu erreichen. Dies ist besonders vorteilhaft bei einer gegensinnigen Rotationsrichtung der ersten und zweiten Förderschnecke.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematisch dargestellte linke Seitenansicht eines Mähdreschers,
- Figur 2: eine Seitenansicht der Doppelschneckenfördereinrichtung,
- Figur 3: eine schematisch dargestellte rechte Seitenansicht des Mähdreschers,
- Figur 4a: eine Seitenansicht der Einzelheit Y und
- Figur 4b: eine alternative Ausgestaltung der Einzelheit Y.

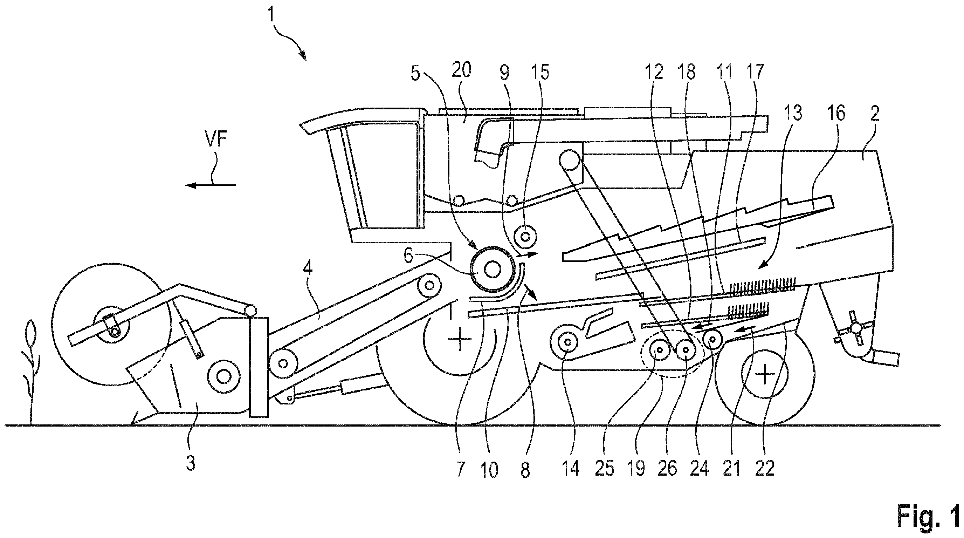

Die in Fig. 1 schematisch dargestellte selbstfahrende Erntemaschine 1 ist als Mähdrescher ausgebildet. Der Mähdrescher besteht aus einem mit dem Fahrwerk verbundenen Traggestell, auf dem ein mehrteiliges Maschinengehäuse 2 befestigt ist. Der Mähdrescher nimmt mit einem Schneidwerk 3 in an sich bekannter Weise Erntegut von einem Feld auf. Das aufgenommene Erntegut wird über einen Schrägförderer 4 an das Dreschwerk 5 übergeben. In dem ein- oder mehrtrommelig ausgeführten Dreschwerk 5 wird das Erntegut zwischen den Dreschtrommeln 6 und einem diese wenigstens teilweise ummantelnden Dreschkorb 7 hindurchgeführt und in zumindest zwei Teilströme 8, 9 getrennt. Der erste Teilstrom 8 besteht im Wesentlichen aus Körnern, Kurzstroh und Spreu und wird über einen Vorbereitungsboden 10 einer aus einem Obersieb 11 und einem Untersieb 12 bestehenden Siebanordnung 13 zugeführt. Ein Reinigungsgebläse 14 generiert einen Luftstrom, welcher die Siebe 11, 12 durchsetzt. Der im rückwärtigen Bereich des Dreschwerks 5 aus diesem austretende weitere, im Wesentlichen aus Stroh und einem Restkornanteil bestehende Teilstrom 9 wird mittels einer Stohleittrommel 15 auf ein als Hordenschüttler 16 ausgeführtes Abscheideorgan geleitet. Durch die Bewegung des Hordenschüttlers 16 wird ein großer Anteil der in der Strohschicht enthaltenen Körner auf dem Hordenschüttler 16 abgeschieden und über einen sogenannten Rücklaufboden 17 und den Vorbereitungsboden 10 an die Siebanordnung 13 übergeben. In der Siebanordnung 13 wird schließlich aus den in diese eingeleiteten Gutströme ein gereinigter Körnerstrom 18 abgeschieden und mittels eines im Folgenden noch näher beschriebenen Doppelschneckenquerförderers 19 in einen Korntank 20 gefördert und dort zwischengespeichert. Der die Siebanordnung 13 zusätzlich verlassende und als Überkehr 21 bezeichnete Massenstrom besteht zum einen aus Teilen des Ernteguts, die schwerer sind als die Spreu und auch schwerer als die Körner selbst, so dass sie nicht von dem Reinigungsgebläse 14 aus dem Siebkasten geblasen werden können. Das sind ungedroschene Ähren oder ungenügend entgrannte Körner, die deshalb erneut gedroschen werden müssen. Zum anderen befinden sich auch einzelne Körner in der Überkehr 21.

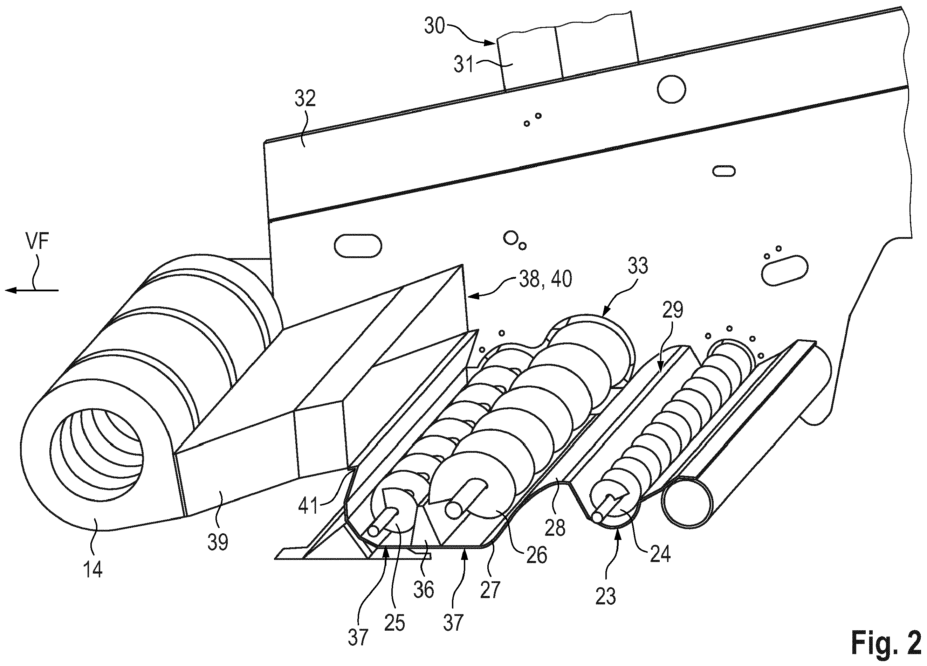

Die Überkehr 21 rutscht auf Grund der Schwerkraft über einen Rückführboden 22 in eine in Fig. 2 näher dargestellte Überkehrschneckenmulde 23, die untenseitig einer sich quer zur Längserstreckung des Mähdreschers ausgerichteten Überkehrschnecke 24 angeordnet ist. Die Überkehrschnecke 24 fördert die Überkehr 21 zu einer Längsseite des Mähdreschers, an welcher diese mittels eines Überkehrelevators (nicht gezeigt) zu dem Dreschwerk 5 rückgeführt wird. Der Überkehrschnecke 24 ist in Vorwärtsfahrtrichtung VF des Mähdreschers der Doppelschneckenquerförderer 19 vorgeordnet, welcher eine erste und zweite Förderschnecke 25, 26 aufweist. Die erste und zweite Förderschnecke 25, 26 sind quer zur Längserstreckung des Mähdreschers ausgerichtet und in einem Schneckensumpf 27 angeordnet, welcher die Förderschnecken 25, 26 im Wesentlichen untenseitig umschließt. Der Schneckensumpf 27 und die Überkehrschneckenmulde 23 sind mit einem Boden 28 verbunden. Der Boden 28 ist ausgehend von der Überkehrschneckenmulde 23 in Richtung des Schneckensumpfes 27 geneigt, so dass dieser mit der Überkehrschneckenmulde 23 eine Kante 29 bildet, welche ein Überlaufen des Korns von dem Schneckensumpf 27 hin zu der Überkehrschneckenmulde 23 vermeiden soll. Die erste Förderschnecke 25 ist innerhalb des Schneckensumpfes 27 in einem dem Reinigungsgebläse 14 zugewandt Bereich und die zweite Förderschnecke 26 in einem der Überkehrschnecke 24 zugewandt Bereich angeordnet.

Der die Siebanordnung 13 verlassende gereinigte Körnerstrom 18 wird der zweiten Förderschnecke 26 zugeführt, wo er von dieser erfasst und abgefördert wird. Ein Anhäufen des Ernteguts im Bereich der zweiten Förderschnecke 26 führt zu einem Überlaufen des Ernteguts hin zu der ersten Förderschnecke 25. Mittels der ersten und der zweiten Förderschnecken wird der Körnerstrom 18 einem an einer rechten Längsseite 32 angeordneten Elevator 30 zugeführt. Hierfür weisen die rechte Längsseite 32 und das Elevatorgehäuse 31 eine Aussparung 33 auf, durch welche die Förderschnecken 25, 26 das Erntegut zu einem unteren Annahmebereich 34 des Elevators 30 fördern. Der Elevator 30 fördert dann das Erntegut zu einem oberen Abgabebereich 35, in dem das Erntegut den Korntank 20 des Mähdreschers zugeführt wird.

Der äußere Durchmesser der ersten Förderschnecke 25 ist kleiner als der äußere Durchmesser der zweiten Förderschnecke 26, da die erste Förderschnecke 25 im Wesentliche der Abförderung des aus dem Bereich der zweiten Förderschnecke 26 in Richtung der ersten Förderschnecke 25 bzw. des Reinigungsgebläses 14 überlaufenden Ernteguts dient und somit im Vergleich zur zweiten Förderschnecke einen geringeren Anteil des Ernteguts fördert.

Zwischen der ersten und zweiten Förderschnecke 25, 26 befindet sich ein Trennelement 36. Das Trennelement 36 erstreckt sich quer zur Längserstreckung des Mähdreschers und weist im Wesentlichen die Form eines gleichschenkligen Dreiecks auf, wobei die im Wesentlichen gleichlangen Seiten des Dreiecks zwischen der ersten und der zweiten Förderschnecke 25, 26 spitz zusammenlaufen und die Basis des Dreiecks untenseitig im Schneckensumpf 27 ortsfest angeordnet ist, beispielsweise verschraubt ist. Das Trennelement 36 formt für die erste und zweite Förderschnecke 25, 26 jeweils eine separate Mulde 37 innerhalb des Schneckensumpfes 27, welche die jeweilige Förderschnecke 25, 26 im Wesentlichen untenseitig umschließt um die Förderung zu unterstützen.

Die erste Förderschnecke 25 ist einer Öffnung 38 eines Kanalabschnitts 39 des Reinigungsgebläses 14 in Vorwärtsfahrtrichtung VF des Mähdreschers vorgeordnet. Der Kanalabschnitt 39 erstreckt sich ausgehend von dem Reinigungsgebläse 14 in Richtung der ersten Förderschnecke 25 und weist hierbei eine Steigung in Richtung der ersten Förderschnecke 25 auf. Der Kanalabschnitt 39 ist in Richtung der Siebanordnung 13 ausgerichtet, sodass der durch das Reinigungsgebläse 14 erzeugte Luftstrom durch die Öffnung 38 in Richtung der Siebanordnung 13 geführt wird, die Öffnung 38 bildet somit den Luftaustrittsbereich 40 des Reinigungsgebläses 14.

Der Öffnung 38 des Kanalabschnitts 39 ist das sich quer zur Längserstreckung des Mähdreschers zugewandte Ende des Schneckensumpfes 27 in Vorwärtsfahrtrichtung VF des Mähdreschers vorgeordnet, welches einen Teil der die erste Förderschnecke 25 umschließenden und mit dieser zusammenwirkenden Mulde 37 bildet und dessen oberes Ende 41 ein Überlauf hin zu der Öffnung 38 des Kanalabschnitts 39 ist. Mithin fördert die erste Förderschnecke 25 das Erntegut aus einem unmittelbar der Öffnung 38 des Kanalabschnitts 39 vorgeordneten Luftaustrittsbereich 40 ab. Erntegut, welches sich im Bereich der zweiten Förderschnecke 26 anhäuft und in Richtung der ersten Förderschnecke 25 fließt, wird von der ersten Förderschnecke 25 abgefördert und somit ein Überlaufen in das Reinigungsgebläse 14 vermieden.

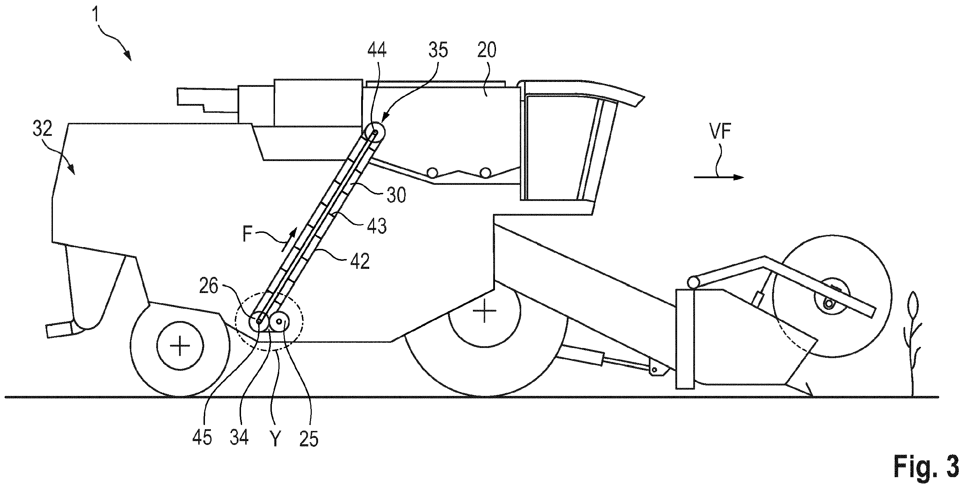

In Fig. 3 ist die rechte Längsseite 32 des in Fig. 1 dargestellten Mähdreschers in einer schematischen Ansicht dargestellt. Der mittels der beiden Förderschnecken 25, 26 in den unteren Annahmebereich 34 des Elevators 30 geförderte Erntegutstrom wird durch die an einer umlaufenden Kette 42 angeordneten Förderplatten 43 erfasst und mittels dieser in Förderrichtung F in den Korntank 20 gefördert. Hierzu weist der Elevator 30 für die umlaufende Kette 42 eine obere Umlenkachse 44, sowie eine untere Umlenkachse 45 auf, welche jeweils quer zur Längserstreckung des Mähdreschers ausgerichtet sind.

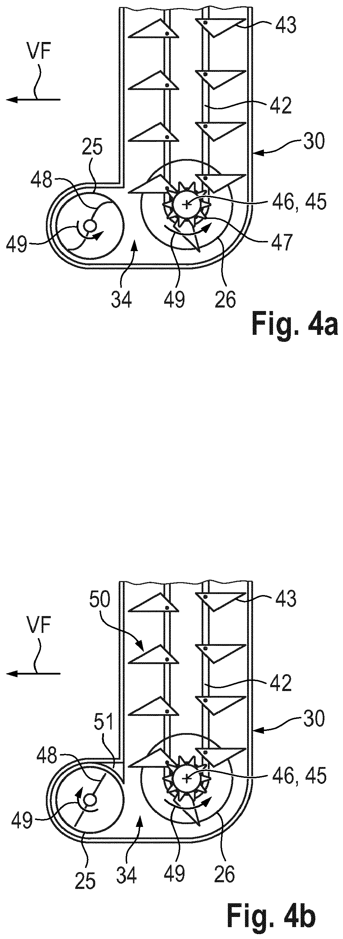

Fig. 4a zeigt die Einzelheit Y aus Fig. 3 in einer vergrößerten, vereinfachten Darstellung. Die Drehachse 46 der zweiten Förderschnecke 26 verläuft deckungsgleich mit der unteren Umlenkachse 45 für die Kette 42 des Elevators 30. Auf der unteren Umlenkachse 45 für die Kette 30 ist ein drehbares Zahnrad 47 angeordnet, das die Umlenkung der Kette 30 ermöglicht. Die erste Förderschnecke 25 endet seitlich neben der Kette 30 und weist hier zwei als Wurfpaddel ausgebildete Gutumleitelemente 48 auf, mittels dessen das von der ersten Förderschnecke 25 geförderte Erntegut in Richtung der Kette 30 umgeleitet wird. In der hier dargestellten Ausführung sind die Gutumleitelemente 48 rückwärtsgekrümmt zur Rotationsrichtung 49 der ersten Förderschnecke 25. Hierdurch wird das Erntegut nach außen geschoben und eine bessere Annahme durch die an der Kette 30 angeordneten Förderplatten 43 erreicht. Eine gerade Ausbildung der Gutumleitelemente 48 liegt ebenfalls im Rahmen der Erfindung.

Untenseitig der beiden Förderschnecken 25, 26 liegt der äußere Durchmesser der ersten Förderschnecke 25 auf einer horizontalen Ebene mit dem äußeren Durchmesser der zweiten Förderschnecke 26 oder tiefer. Hierdurch wird das von der ersten Förderschnecke 25 geförderte Erntegut unterhalb des von der zweiten Förderschnecke 26 geförderten Ernteguts den Förderplatten 43 zugeführt, sodass ein Gegeneinanderfließen des von den Förderschnecken 25, 26 geförderten Ernteguts vermieden bzw. reduziert wird. In der hier gezeigten Ausführungsform weisen die ersten und zweite Förderschnecke 25, 26 eine gleichsinnige Rotationsrichtung 49 auf, wobei das von der ersten Förderschnecke 25 geförderte Erntegut untenseitig im Annahmebereich 34 den Förderplatten 43 zugeführt wird.

Fig. 4b zeigt eine alternative Ausführungsform der Einzelheit Y, bei der die Gutumleitelemente 48 gerade ausgeführt sind und die Förderschnecken 25, 26 eine gegensinnige Rotationsrichtung 49 aufweisen. Hierbei fördern die Gutumleitelemente 48 der ersten Förderschnecke 25 obenseitig im Annahmebereich 34 das Erntegut in den Rücken 50 der Förderplatten 43. Obenseitig der ersten Förderschnecke 25 ist im Annahmebereich 34 ein als Leitblech ausgeführtes Leitelement 51 angeordnet, welches die Gutführung in Richtung des Rückens 50 der Förderplatten 43 unterstützt.

**Bezugszeichenliste:**

| | | | |
|---|---|---|---|
| 1 | Erntemaschine | 34 | Unterer Annahmebereich |
| 2 | Maschinengehäuse | 35 | Oberer Abgabebereich |
| 3 | Schneidwerk | 36 | Trennelement |
| 4 | Schrägförderer | 37 | Mulde |
| 5 | Dreschwerk | 38 | Öffnung |
| 6 | Dreschtrommel | 39 | Kanalabschnitt |
| 7 | Dreschkorb | 40 | Luftaustrittsbereich |
| 8 | Teilstrom | 41 | Ende |
| 9 | Teilstrom | 42 | Kette |
| 10 | Vorbereitungsboden | 43 | Förderplatten |
| 11 | Obersieb | 44 | Obere Umlenkachse |
| 12 | Untersieb | 45 | Untere Umlenkachse |
| 13 | Siebanordnung | 46 | Drehachse |
| 14 | Reinigungsgebläse | 47 | Zahnrad |
| 15 | Strohleittrommel | 48 | Gutumleitelemente |
| 16 | Hordenschüttler | 49 | Rotationsrichtung |
| 17 | Rücklaufboden | 50 | Rücken |
| 18 | Körnerstrom | 51 | Leitelement |
| 19 | Doppelschneckenquerförderer | | |
| 20 | Korntank | VF | Vorwärtsfahrtrichtung |
| 21 | Überkehr | F | Förderrichtung |
| 22 | Rückführboden | Y | Einzelheit |
| 23 | Überkehrschneckenmulde | | |
| 24 | Überkehrschnecke | | |
| 25 | Erste Förderschnecke | | |
| 26 | Zweite Förderschnecke | | |
| 27 | Schneckensumpf | | |
| 28 | Boden | | |
| 29 | Kante | | |
| 30 | Elevator | | |
| 31 | Elevatorgehäuse | | |
| 32 | Rechte Längsseite | | |
| 33 | Aussparung | | |

## Patentansprüche

1. Doppelschneckenquerförderer (19) einer selbstfahrenden Erntemaschine (1), welche zumindest eine Siebanordnung (13) zum Abscheiden von Erntegut, ein Reinigungsgebläse (14), eine Überkehrschnecke (24) und einen Elevator (30) umfasst, wobei der Doppelschneckenquerförderer (19) zwischen dem Reinigungsgebläse (14) und der Überkehrschnecke (24) angeordnet ist und zumindest zwei Förderschnecken (25, 26) aufweist, welche untenseitig dem Elevator (30) zugeordnet sind,
**dadurch gekennzeichnet, dass**
die erste Förderschnecke (25) aus einem Luftaustrittsbereich (40) des Reinigungsgebläses (14) Erntegut abfördert und die zweite Förderschnecke (26) aus einem der Überkehrschnecke (24) zugewandten Bereich Erntegut abfördert.

2. Doppelschneckenquerförderer (19) nach Anspruch 1, **dadurch gekennzeichnet, dass** das Reinigungsgebläse (14) einen auf die Siebanordnung (13) gerichteten Kanalabschnitt (39) aufweist, wobei die erste Förderschnecke (25) einer der Siebanordnung (13) zugewandten Öffnung (38) des Kanalabschnitts (39) zugeordnet ist.

3. Doppelschneckenquerförderer (19) nach einem der Ansprüche 1 bis 2, **dadurch gekennzeichnet, dass** der äußere Durchmesser der ersten Förderschnecke (25) kleiner als der äußere Durchmesser der zweiten Förderschnecke (26) ist.

4. Doppelschneckenquerförderer (19) nach einem der Ansprüche 1 bis 3, **dadurch gekennzeichnet, dass** zwischen den Förderschnecken (25, 26) ein Trennelement (36) angeordnet ist, welches für beide Förderschnecken (25, 26) zumindest anteilig jeweils eine Mulde (37) bildet.

5. Doppelschneckenquerförderer (19) nach einem der Ansprüche 1 bis 4, **dadurch gekennzeichnet, dass** die erste und zweite Förderschnecke (25, 26) zumindest einen Teil des von der Siebanordnung (13) abgeschiedenen Ernteguts zu einem unteren Annahmebereich (34) des Elevators (30) fördern, wobei der Elevator (30) mittels an einer umlaufenden Kette (42) angeordneten Förderplatten (43) das Erntegut in einen oberen Abgabebereich (35) fördert, wobei die erste Förderschnecke (25) seitlich neben der Kette (42) endet und zumindest zwei Gutumleitelemente (48) zum Umlenken des Ernteguts in Richtung der Kette (42) aufweist.

6. Doppelschneckenquerförderer (19) nach einem der Ansprüche 1 bis 5, **dadurch gekennzeichnet, dass** die Drehachse der zweiten Förderschnecke (26) deckungsgleich mit einer unteren Umlenkachse (45) für die umlaufende Kette (42) ist.

7. Doppelschneckenquerförderer (19) nach einem der Ansprüche 1 bis 6, **dadurch gekennzeichnet, dass** die Gutumleitelemente (48) in Rotationsrichtung (49) der ersten Förderschecke (25) gerade oder rückwärtsgekrümmt sind.

8. Doppelschneckenquerförderer (19) nach einem der Ansprüche 1 bis 7, **dadurch gekennzeichnet, dass** untenseitig der beiden Förderschnecken (25, 26) der äußere Durchmesser der ersten Förderschnecke (25) auf einer horizontalen Ebene mit dem äußeren Durchmesser der zweiten Förderschnecke (26) oder tiefer liegt.

9. Doppelschneckenquerförderer (19) nach einem der Ansprüche 1 bis 8, **dadurch gekennzeichnet, dass** der untere Annahmebereich (34) obenseitig ein Leitelement (51) aufweist, welches mit den Gutumleitelementen (48) zusammenwirkt.
